# EUROPEAN PATENT APPLICATION

(11) **EP 4 625 342 A1**
(43) Date of publication of application: **01.10.2025**
(21) Application number: 24787818.4
(22) Date of filing: 23.02.2024
(51) Int. Cl.: G06T 19/20

(54) **VIEWING ANGLE SWITCHING METHOD AND APPARATUS, AND VEHICLE**

(30) Priority: 13.04.2023 CN 202310431166
(71) Applicant: Huawei Technologies Co., Ltd., Shenzhen, Guangdong 518129 (CN)
(72) Inventor: WANG, Xiyao, Shenzhen, Guangdong 518129 (CN)
(74) Representative: Maiwald GmbH
(86) International application number: PCT/CN2024/078359
(87) International publication number: WO 2024/212712

(57) **Abstract**

This application provides a viewing angle switching method and apparatus, and a vehicle. According to the method, the apparatus, or the vehicle, when it is detected that a speed of the vehicle is greater than or equal to a first threshold, a three-dimensional scene viewing angle of the vehicle can be switched from a top-down viewing angle to a first viewing angle. The first viewing angle is a driving viewing angle, the first viewing angle is a viewing angle that forms a first included angle with a horizontal direction, and the first included angle is less than 90°. According to the method, the apparatus, or the vehicle, a vehicle speed threshold is set as a necessary condition for restoring the three-dimensional scene viewing angle from the top-down viewing angle to the driving viewing angle, so that whether an obstacle is present around the vehicle is no longer a switching condition of viewing angle switching, and a frequency of changing the three-dimensional scene viewing angle is greatly reduced. This can avoid frequent changes of the three-dimensional scene viewing angle that are caused by obstacle alerts in a low-speed traveling process of the vehicle, and therefore can improve user experience.

## Description

This application claims priority to Chinese Patent Application No. 202310431166.8, filed with the China National Intellectual Property Administration on April 13, 2023, and entitled "VIEWING ANGLE SWITCHING METHOD AND APPARATUS, AND VEHICLE", which is incorporated herein by reference in its entirety.

### TECHNICAL FIELD

This application relates to the vehicle field, and more specifically, to a viewing angle switching method and apparatus, and a vehicle.

### BACKGROUND

When a vehicle with an assisted driving capability travels at a low speed, a vehicle radar gives an alert when detecting an obstacle nearby, and marks an orientation and a distance of the obstacle near a three-dimensional (three-dimensional, 3D) vehicle model of the ego vehicle that is displayed on a display. In addition, a 3D scene viewing angle is switched to a vertical top-down viewing angle, so that it is convenient for a user to observe the nearby obstacle. If no obstacle is nearby, the 3D scene viewing angle is restored to a default viewing angle.

However, when the vehicle is in a scenario in which obstacles can be frequently identified, the user may have poor experience. For example, during road congestion, the ego vehicle is in a low-speed traveling state and surrounding vehicles often approach and move away from the ego vehicle. As a result, a viewing angle of the vehicle model that is of the ego vehicle and that is displayed on the display of the ego vehicle is frequently switched between a driving viewing angle and the vertical top-down viewing angle, and a change degree of viewing angle switching is large, which result in poor display effect, may further cause the user to feel dizzy, and affect user experience.

### SUMMARY

Embodiments of this application provide a viewing angle switching method and apparatus, and a vehicle. In the method, a vehicle speed threshold is set as a necessary condition for restoring a three-dimensional scene viewing angle from a top-down viewing angle to a driving viewing angle, so that whether an obstacle is present around the vehicle is no longer a switching condition of viewing angle switching, and a frequency of changing the three-dimensional scene viewing angle is greatly reduced. This can avoid frequent changes of the three-dimensional scene viewing angle that are caused by obstacle alerts in a low-speed traveling process of the vehicle, and therefore can improve user experience.

According to a first aspect, a viewing angle switching method is provided. The method includes: when detecting that a speed of a vehicle is greater than or equal to a first threshold, switching a three-dimensional scene viewing angle of the vehicle from a top-down viewing angle to a first viewing angle, where the first viewing angle is a driving viewing angle, the first viewing angle is a viewing angle that forms a first included angle with a horizontal direction, and the first included angle is less than 90°.

The horizontal direction may be understood as a direction in which the vehicle moves forward.

Optionally, a value of the first included angle may be any angle value greater than 0° and less than 30°, for example, 15°.

Optionally, the first threshold may be a specific speed value, for example, 10 km/h, 15 km/h, or 30 km/h; may be any speed value determined based on a user input; or may be a speed value automatically determined by a system. This is not limited in this application. Alternatively, the first threshold may be a speed range, for example, 5 km/h to 20 km/h, 10 km/h to 20 km/h, or 10 km/h to 30 km/h; may be any speed range determined based on a user input; or may be a speed range automatically determined by a system. This is not limited in this application.

The top-down viewing angle is greater than the first viewing angle.

Optionally, the top-down viewing angle may be 90°, or the top-down viewing angle may take any angle value greater than 30° and less than 90°.

In this embodiment of this application, a vehicle speed threshold is set as a necessary condition for restoring the 3D scene viewing angle displayed on a display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for a user to observe a situation around the vehicle in real time. The method can avoid frequent changes of the 3D scene viewing angle displayed on the display that are caused by low-speed obstacle alerts in a traveling process of the vehicle, and therefore improve user experience.

With reference to the first aspect, in a possible implementation, the method further includes: when detecting that the speed of the vehicle is less than a second threshold and an obstacle is present in a first area in which the vehicle is located, switching the three-dimensional scene viewing angle of the vehicle from the first viewing angle to a second viewing angle, where the second viewing angle is a viewing angle that forms a second included angle with the horizontal direction, the second included angle is greater than the first included angle, and the second included angle is less than 90°.

Optionally, a value of the second included angle may be any angle value greater than or equal to 30° and less than 90°, for example, 45° or 60°.

Optionally, the second threshold may be a specific speed value, for example, 10 km/h, 15 km/h, or 30 km/h; may be any speed value determined based on a user input; or may be a speed value automatically determined by the system. This is not limited in this application. Alternatively, the second threshold may be a speed range, for example, 5 km/h to 20 km/h, 10 km/h to 20 km/h, or 10 km/h to 30 km/h; may be any speed range determined based on a user input; or may be a speed range automatically determined by the system. This is not limited in this application.

Optionally, the first area is a rounded rectangular area centered on the vehicle, a long side of the rounded rectangular area is parallel to a vehicle door side of the vehicle, a length of a rounded rectangle is X1, a width of the rounded rectangle is X2, and radiuses of four rounded corners of the rounded rectangle are R.

Values of X1, X2, and R may be determined based on a user input, may be automatically determined by the system, or may be determined based on road condition information. For example, X1=(200 cm+vehicle body length), X2=(100 cm+vehicle body width), and R=(50 cm+vehicle body diagonal length/2). This is not limited in this application.

In this embodiment of this application, when the vehicle is in a low-speed traveling state and it is detected that an obstacle is present around the vehicle, the 3D scene viewing angle displayed on the in-vehicle infotainment display is switched from the driving viewing angle to a slightly top-down viewing angle. In this way, the user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

With reference to the first aspect, in a possible implementation, the first threshold is greater than the second threshold.

Optionally, when the second threshold is a specific speed value, the first threshold may be any low speed value greater than the second threshold. For example, if the second threshold is 10 km/h, the first threshold may be any value greater than 10 km/h and less than or equal to 30 km/h. When the second threshold is a speed range, the first threshold may be any low speed range greater than the second threshold. For example, if the second threshold is 5 km/h to 20 km/h, the first threshold may be 5 km/h to 30 km/h, or may be 20 km/h to 30 km/h.

In this embodiment of this application, a speed threshold in a trigger condition for restoring the second viewing angle to the first viewing angle is greater than a speed threshold in a trigger condition for switching the first viewing angle to the second viewing angle. In this way, the frequency of changing the viewing angle can be further reduced, and therefore user experience can be further improved.

With reference to the first aspect, in a possible implementation, the first threshold is equal to the second threshold.

With reference to the first aspect, in a possible implementation, the method further includes: if the speed of the vehicle remains in a state of being less than the second threshold, maintaining the three-dimensional scene viewing angle of the vehicle as the second viewing angle.

In this embodiment of this application, the vehicle speed threshold is set as the necessary condition for restoring the 3D scene viewing angle displayed on the display of the vehicle from the top-down viewing angle to the driving viewing angle, to enable the 3D scene viewing angle to remain unchanged when the vehicle is in the low-speed state (for example, the vehicle is in the congestion state), so that it is convenient for the user to observe the situation around the vehicle in real time. The method can avoid the frequent changes of the 3D scene viewing angle displayed on the display that are caused by the low-speed obstacle alerts in the traveling process of the vehicle, and therefore improve user experience.

With reference to the first aspect, in a possible implementation, no obstacle is present in the first area.

In this embodiment of this application, the vehicle speed threshold is set as the necessary condition for restoring the 3D scene viewing angle displayed on the display of the vehicle from the top-down viewing angle to the driving viewing angle, so that viewing angle switching is not triggered even if an obstacle disappears. This greatly reduces the frequency of changing the 3D scene viewing angle, and enables the 3D scene viewing angle to remain unchanged when the vehicle is in the low-speed state (for example, the vehicle is in the congestion state), so that it is convenient for the user to observe the situation around the vehicle in real time. The method can avoid the frequent changes of the 3D scene viewing angle displayed on the display that are caused by the low-speed obstacle alerts in the traveling process of the vehicle, and therefore improve user experience.

According to a second aspect, a viewing angle switching method is provided. The method includes: when detecting that a speed of a vehicle is less than a second threshold and an obstacle is present in a first area in which the vehicle is located, switching a three-dimensional scene viewing angle of the vehicle from a first viewing angle to a second viewing angle, where the first viewing angle is a driving viewing angle, the first viewing angle is a viewing angle that forms a first included angle with a horizontal direction, the second viewing angle is a viewing angle that forms a second included angle with the horizontal direction, the second included angle is greater than the first included angle, and the second included angle is less than 90°.

The horizontal direction may be understood as a direction in which the vehicle moves forward.

Optionally, a value of the first included angle may be any angle value greater than 0° and less than 30°, for example, 15°.

Optionally, a value of the second included angle may be any angle value greater than or equal to 30° and less than 90°, for example, 45° or 60°.

Optionally, the second threshold may be a specific speed value, for example, 10 km/h, 15 km/h, or 30 km/h; may be any speed value determined based on a user input; or may be a speed value automatically determined by a system. This is not limited in this application. Alternatively, the second threshold may be a speed range, for example, 5 km/h to 20 km/h, 10 km/h to 20 km/h, or 10 km/h to 30 km/h; may be any speed range determined based on a user input; or may be a speed range automatically determined by a system. This is not limited in this application.

Optionally, the first area is a rounded rectangular area centered on the vehicle, and a long side of the rounded rectangular area is parallel to a vehicle door side of the vehicle.

A length of a rounded rectangle is denoted as X1, a width of the rounded rectangle is denoted as X2, and radiuses of four rounded corners of the rounded rectangle are denoted as R.

Values of X1, X2, and R may be determined based on a user input, may be automatically determined by the system, or may be determined based on road condition information. For example, X1=(200 cm+vehicle body length), X2=(100 cm+vehicle body width), and R=(50 cm+vehicle body diagonal length/2). This is not limited in this application.

In this embodiment of this application, when the vehicle is in a low-speed traveling state and it is detected that an obstacle is present around the vehicle, the 3D scene viewing angle displayed on an in-vehicle infotainment display is switched from the driving viewing angle to a slightly top-down viewing angle. In this way, a user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

According to a third aspect, a viewing angle switching apparatus is provided. The apparatus includes: a switching module, configured to: when it is detected that a speed of a vehicle is greater than or equal to a first threshold, switch a three-dimensional scene viewing angle of the vehicle from a top-down viewing angle to a first viewing angle, where the first viewing angle is a driving viewing angle, the first viewing angle is a viewing angle that forms a first included angle with a horizontal direction, and the first included angle is less than 90°.

The horizontal direction may be understood as a direction in which the vehicle moves forward.

Optionally, a value of the first included angle may be any angle value greater than 0° and less than 30°, for example, 15°.

Optionally, the first threshold may be a specific speed value, for example, 10 km/h, 15 km/h, or 30 km/h; may be any speed value determined based on a user input; or may be a speed value automatically determined by a system. This is not limited in this application. Alternatively, the first threshold may be a speed range, for example, 5 km/h to 20 km/h, 10 km/h to 20 km/h, or 10 km/h to 30 km/h; may be any speed range determined based on a user input; or may be a speed range automatically determined by a system. This is not limited in this application.

An included angle of the top-down viewing angle is greater than an included angle (namely, the first included angle) of the first viewing angle.

Optionally, the top-down viewing angle may be 90°, or the top-down viewing angle may take any angle value greater than 30° and less than 90°.

In this embodiment of this application, a vehicle speed threshold is set as a necessary condition for restoring the 3D scene viewing angle displayed on a display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for a user to observe a situation around the vehicle in real time. The apparatus can avoid frequent changes of the 3D scene viewing angle displayed on the display that are caused by low-speed obstacle alerts in a traveling process of the vehicle, and therefore improve user experience.

With reference to the third aspect, in a possible implementation, the switching module is further configured to: when it is detected that the speed of the vehicle is less than a second threshold and an obstacle is present in a first area in which the vehicle is located, switch the three-dimensional scene viewing angle of the vehicle from the first viewing angle to a second viewing angle, where the second viewing angle is a viewing angle that forms a second included angle with the horizontal direction, the second included angle is greater than the first included angle, and the second included angle is less than 90°.

Optionally, a value of the second included angle may be any angle value greater than or equal to 30° and less than 90°, for example, 45° or 60°.

Optionally, the second threshold may be a specific speed value, for example, 10 km/h, 15 km/h, or 30 km/h; may be any speed value determined based on a user input; or may be a speed value automatically determined by the system. This is not limited in this application. Alternatively, the second threshold may be a speed range, for example, 5 km/h to 20 km/h, 10 km/h to 20 km/h, or 10 km/h to 30 km/h; may be any speed range determined based on a user input; or may be a speed range automatically determined by the system. This is not limited in this application.

Optionally, the first area is a rounded rectangular area centered on the vehicle, a long side of the rounded rectangular area is parallel to a vehicle door side of the vehicle, a length of a rounded rectangle is X1, a width of the rounded rectangle is X2, and radiuses of four rounded corners of the rounded rectangle are R.

Values of X1, X2, and R may be determined based on a user input, may be automatically determined by the system, or may be determined based on road condition information. For example, X1=(200 cm+vehicle body length), X2=(100 cm+vehicle body width), and R=(50 cm+vehicle body diagonal length/2). This is not limited in this application.

In this embodiment of this application, when the vehicle is in a low-speed traveling state and it is detected that an obstacle is present around the vehicle, the 3D scene viewing angle displayed on the in-vehicle infotainment display is switched from the driving viewing angle to a slightly top-down viewing angle. In this way, the user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

With reference to the third aspect, in a possible implementation, the apparatus further includes: a determining module, configured to determine whether the speed of the vehicle is greater than or equal to the first threshold, where the determining module is further configured to determine whether the speed of the vehicle is less than the second threshold.

With reference to the third aspect, in a possible implementation, the apparatus further includes: an identification module, configured to identify whether an obstacle is present in the first area in which the vehicle is located.

With reference to the third aspect, in a possible implementation, the first threshold is greater than the second threshold.

Optionally, when the second threshold is a specific speed value, the first threshold may be any low speed value greater than the second threshold. For example, if the second threshold is 10 km/h, the first threshold may be any value greater than 10 km/h and less than or equal to 30 km/h. When the second threshold is a speed range, the first threshold may be any low speed range greater than the second threshold. For example, if the second threshold is 5 km/h to 20 km/h, the first threshold may be 5 km/h to 30 km/h, or may be 20 km/h to 30 km/h.

In this embodiment of this application, a speed threshold in a trigger condition for restoring the second viewing angle to the first viewing angle is greater than a speed threshold in a trigger condition for switching the first viewing angle to the second viewing angle. In this way, the frequency of changing the viewing angle can be further reduced, and therefore user experience can be further improved.

With reference to the third aspect, in a possible implementation, the first threshold is equal to the second threshold.

According to a fourth aspect, a viewing angle switching apparatus is provided. The apparatus includes: a switching module, configured to: when it is detected that a speed of a vehicle is less than a second threshold and an obstacle is present in a first area in which the vehicle is located, switch a three-dimensional scene viewing angle of the vehicle from a first viewing angle to a second viewing angle, where the first viewing angle is a driving viewing angle, the first viewing angle is a viewing angle that forms a first included angle with a horizontal direction, the second viewing angle is a viewing angle that forms a second included angle with the horizontal direction, the second included angle is greater than the first included angle, and the second included angle is less than 90°.

The horizontal direction may be understood as a direction in which the vehicle moves forward.

Optionally, a value of the first included angle may be any angle value greater than 0° and less than 30°, for example, 15°.

Optionally, a value of the second included angle may be any angle value greater than or equal to 30° and less than 90°, for example, 45° or 60°.

Optionally, the second threshold may be a specific speed value, for example, 10 km/h, 15 km/h, or 30 km/h; may be any speed value determined based on a user input; or may be a speed value automatically determined by a system. This is not limited in this application. Alternatively, the second threshold may be a speed range, for example, 5 km/h to 20 km/h, 10 km/h to 20 km/h, or 10 km/h to 30 km/h; may be any speed range determined based on a user input; or may be a speed range automatically determined by a system. This is not limited in this application.

Optionally, the first area is a rounded rectangular area centered on the vehicle, and a long side of the rounded rectangular area is parallel to a vehicle door side of the vehicle.

A length of a rounded rectangle is denoted as X1, a width of the rounded rectangle is denoted as X2, and radiuses of four rounded corners of the rounded rectangle are denoted as R.

Values of X1, X2, and R may be determined based on a user input, may be automatically determined by the system, or may be determined based on road condition information. For example, X1=(200 cm+vehicle body length), X2=(100 cm+vehicle body width), and R=(50 cm+vehicle body diagonal length/2). This is not limited in this application.

In this embodiment of this application, when the vehicle is in a low-speed traveling state and it is detected that an obstacle is present around the vehicle, the 3D scene viewing angle displayed on an in-vehicle infotainment display is switched from the driving viewing angle to a slightly top-down viewing angle. In this way, a user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

According to a fifth aspect, an electronic device is provided. The electronic device includes one or more processors, one or more memories, and one or more computer programs. The one or more computer programs are stored in the one or more memories. The one or more computer programs include instructions. When the instructions are executed by the one or more processors, the electronic device is enabled to perform the method in any one of the first aspect or the possible implementations of the first aspect, or perform the method in the second aspect.

According to a sixth aspect, a vehicle is provided. The vehicle includes the apparatus in any one of the third aspect or the possible implementations of the third aspect, includes the apparatus in the fourth aspect, or includes the electronic device in the third aspect.

According to a seventh aspect, a computer-readable storage medium is provided. The computer-readable storage medium stores a computer program or instructions. When the computer program or the instructions are executed, the method in any one of the first aspect or the possible implementations of the first aspect is implemented, or the method in the second aspect is implemented.

According to an eighth aspect, a chip is provided. The chip stores instructions. When the instructions are run on a device, the chip is enabled to perform the method in any one of the first aspect or the possible implementations of the first aspect, or perform the method in the second aspect.

According to a ninth aspect, a computer program product including instructions is provided. When the computer program product runs on a computer, the computer is enabled to perform the method in any one of the first aspect or the possible implementations of the first aspect, or perform the method in the second aspect.

### BRIEF DESCRIPTION OF DRAWINGS

FIG. 1 is a functional block diagram of a vehicle according to an embodiment of this application;
FIG. 2 is a diagram of a viewing angle switching method in a conventional technology according to an embodiment of this application;
FIG. 3 is a diagram of interface display corresponding to a 3D scene viewing angle according to an embodiment of this application;
FIG. 4 is a diagram of interface display corresponding to another 3D scene viewing angle according to an embodiment of this application;
FIG. 5 is a diagram of interface display corresponding to another 3D scene viewing angle according to an embodiment of this application;
FIG. 6 is a schematic flowchart of a viewing angle switching method according to an embodiment of this application;
FIG. 7 is a schematic flowchart of another viewing angle switching method according to an embodiment of this application;
FIG. 8 is a schematic flowchart of another viewing angle switching method according to an embodiment of this application;
FIG. 9 is a schematic flowchart of another viewing angle switching method according to an embodiment of this application;
FIG. 10 is a schematic flowchart of another viewing angle switching method according to an embodiment of this application; and
FIG. 11 is a block diagram of a viewing angle switching apparatus according to an embodiment of this application.

### DESCRIPTION OF EMBODIMENTS

Terms used in the following embodiments are merely intended to describe specific embodiments, but are not intended to limit this application. "One", "a", "the" and "this" of singular expression forms used in the specification and the appended claims of this application are also intended to include expression forms such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and other variants thereof all mean "include but are not limited to", unless otherwise specifically emphasized in another manner.

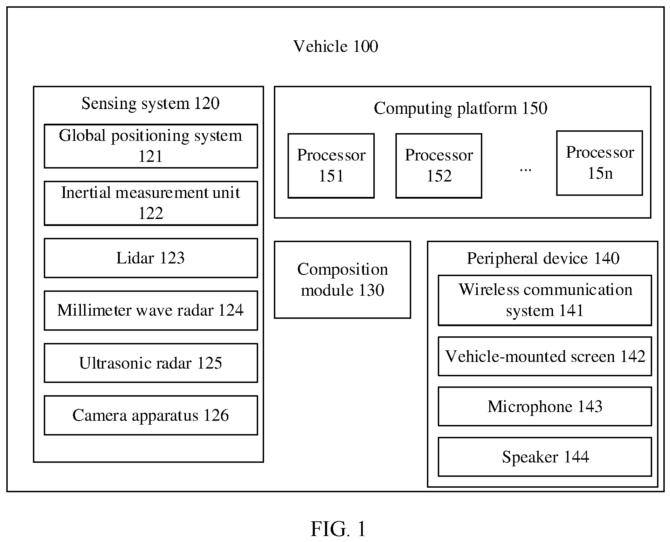

FIG. 1 is a functional block diagram of a vehicle 100 according to an embodiment of this application. As shown in FIG. 1, the vehicle 100 may include a sensing system 120, a composition module 130, a peripheral device 140, and a computing platform 150.

The sensing system 120 may include several types of sensors that sense information about an ambient environment of the vehicle 100. For example, the sensing system 120 may include a positioning system. The positioning system may be a global positioning system (global positioning system, GPS) 121, or may be one or more of a BeiDou system or another positioning system, an inertial measurement unit (inertial measurement unit, IMU) 122, a lidar 123, a millimeter wave radar 124, an ultrasonic radar 125, and a camera apparatus 126.

The vehicle 100 may include the composition module 130. The composition module 130 may draw a map for an environment by using technologies such as an object identification algorithm, a structure from motion (structure from motion, SFM) algorithm, video tracking, and simultaneous localization and mapping (simultaneous localization and mapping, SLAM).

The vehicle 100 interacts with a mobile terminal, an external sensor, another vehicle, another computer system, or a user through the peripheral device 140. The peripheral device 140 may include a wireless communication system 141, a vehicle-mounted screen 142, a microphone 143, and/or a speaker 144.

In some possible implementations, the peripheral device 140 provides a means of interaction between a user of the vehicle 100 and a user interface 160. For example, the vehicle-mounted screen 142 may provide information for the user of the vehicle 100. The user interface 160 may further operate the vehicle-mounted screen 142 to receive an input from the user. The vehicle-mounted screen 142 may perform an operation through a touchscreen. In another case, the peripheral device 140 may provide a means for the vehicle 100 to communicate with another device located in the vehicle. For example, the microphone 143 may receive audio (for example, a voice command or another audio input) from the user of the vehicle 100. Similarly, the speaker 144 may output the audio to the user of the vehicle 100.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory and execute the instructions, to implement a corresponding function.

Optionally, one or more of the foregoing components may be installed separately from or associated with the vehicle 100. The foregoing components may be communicatively coupled together in a wired and/or wireless manner.

Optionally, the foregoing components are merely examples. During actual application, components in the foregoing modules may be added or removed according to an actual requirement. FIG. 1 should not be construed as a limitation on this embodiment of this application.

Optionally, the vehicle 100 may include one or more different types of transportation tools, or may include one or more different types of transportation tools or movable objects that are operated or moved on land (for example, a highway, a road, or a railway), on water (for example, a waterway, a river, or an ocean), or in space. For example, the vehicle may include an automobile, a bicycle, a motorcycle, a train, a subway, an airplane, a boat, an aircraft, a robot, another type of transportation tool, a movable object, or the like. This is not limited in this embodiment of this application.

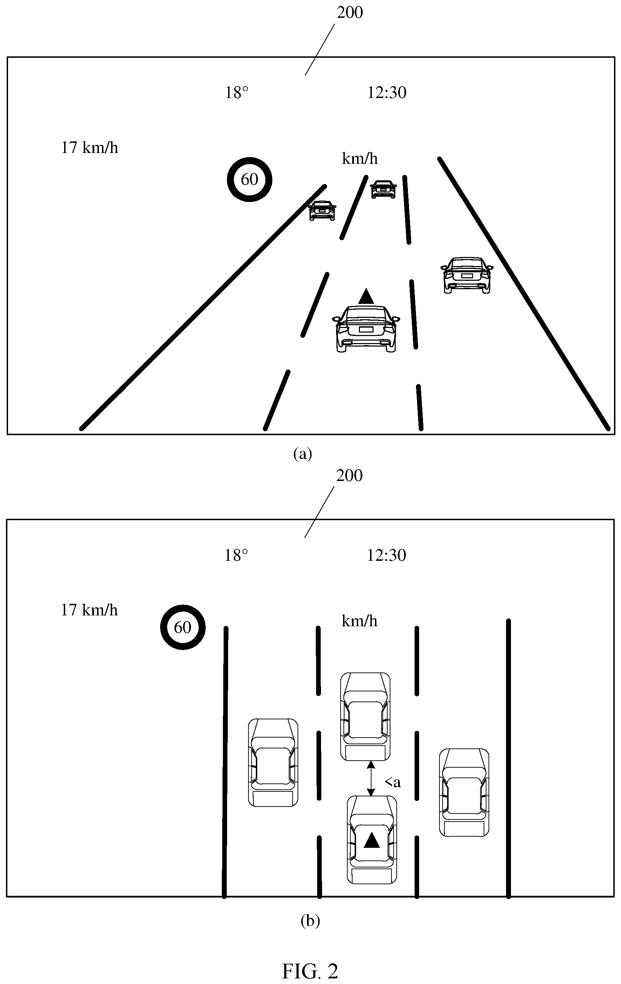

For example, FIG. 2 is a diagram of a viewing angle switching method in a conventional technology according to an embodiment of this application.

When an ego vehicle (a vehicle marked with a black triangle in FIG. 2) is in a traveling state and it is detected that no obstacle is present around the ego vehicle, a 3D scene viewing angle displayed on an in-vehicle infotainment display 200 of the ego vehicle is shown in (a) in FIG. 2. The viewing angle may be referred to as a driving viewing angle. In the viewing angle, one or more vehicles located in front of the ego vehicle can be seen, but a complete view around the ego vehicle cannot be seen. When the ego vehicle is in a low-speed traveling state and it is detected that an obstacle is present around the ego vehicle (for example, a distance between the ego vehicle and a preceding vehicle is less than a), the 3D scene viewing angle displayed on the in-vehicle infotainment display 200 of the ego vehicle is shown in (b) in FIG. 2. The viewing angle is a vertical top-down viewing angle. In the viewing angle, a complete view around the ego vehicle can be seen, and an orientation and a distance of the obstacle around the ego vehicle can also be seen.

In this case, when it is detected that no obstacle is present around the ego vehicle (the present obstacle disappears), the 3D scene viewing angle displayed on the in-vehicle infotainment display 200 of the ego vehicle is restored from the vertical top-down viewing angle (as shown in (b) in FIG. 2) to the driving viewing angle (as shown in (a) in FIG. 2).

It can be learned that, in the existing method, a trigger condition for switching the 3D scene viewing angle displayed on the display of the vehicle from the driving viewing angle to the vertical top-down viewing angle is that the vehicle travels at a low speed and an obstacle is detected around the vehicle, and a trigger condition for restoring the 3D scene viewing angle displayed on the display of the vehicle from the vertical top-down viewing angle to the driving viewing angle is that it is detected that the obstacle disappears (that is, no obstacle is present around the vehicle).

However, when the vehicle is in a scenario in which obstacles can be frequently identified, a user may have poor experience. For example, during road congestion, the ego vehicle is in a low-speed traveling state and surrounding vehicles often approach and move away from the ego vehicle. As a result, a viewing angle of a vehicle model that is of the ego vehicle and that is displayed on the display of the ego vehicle is frequently switched between the driving viewing angle and the vertical top-down viewing angle, and an angle change degree of viewing angle switching is large, which result in poor display effect, may further cause the user to feel dizzy, and affect user experience.

In view of this, embodiments of this application provide a viewing angle switching method and apparatus, and a vehicle. In the method, a vehicle speed threshold is added as a necessary condition for restoring a 3D scene viewing angle displayed on a display of a vehicle from a top-down viewing angle to a driving viewing angle, to greatly reduce a frequency of changing the 3D scene viewing angle, and enable the 3D scene viewing angle to remain unchanged when the vehicle is in a low speed state, so that it is convenient for a user to observe a situation around the vehicle. In addition, a vertical top-down viewing angle is adjusted to a slightly top-down viewing angle, to reduce a degree of viewing angle change, so that visual impact caused by viewing angle switching to the user is reduced, and visual effect and user experience are improved. In conclusion, the method can reduce frequent and great changes of a 3D vehicle model scene viewing angle that are caused by obstacle alerts in a low-speed driving process of the vehicle.

It should be understood that solutions of this application are applied to a vehicle traveling (advancing, reversing, parking, and the like) scenario. For example, the solutions may be applied to a low-speed traveling scenario of the vehicle; may be specifically applied to a vehicle parking scenario, a traveling scenario in a congestion state, or the like; and may be further applied to any electronic device configured with a viewing angle switching function, for example, a robot.

It should be further understood that an example in which the electronic device is a vehicle is used for description in embodiments of this application. However, this does not constitute a limitation on an application scenario of the solutions of this application.

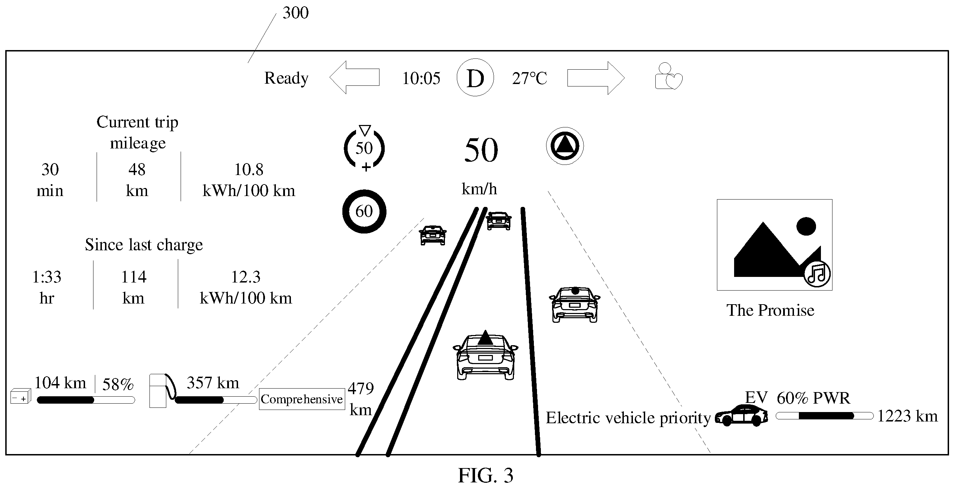

For example, with reference to FIG. 3 to FIG. 5, the following describes diagrams of interface display corresponding to different 3D scene viewing angles according to embodiments of this application.

For example, FIG. 3 is a diagram of interface display corresponding to a 3D scene viewing angle according to an embodiment of this application.

In this embodiment, a vehicle marked with a black triangle represents an ego vehicle, and a vehicle marked with a black circle represents another vehicle. When the ego vehicle is in a low-speed traveling state and it is detected that no obstacle is present around the ego vehicle (or the ego vehicle is in a non-low-speed traveling state), a 3D scene viewing angle displayed on an in-vehicle infotainment display 300 of the ego vehicle is shown in FIG. 3. The viewing angle may be referred to as a driving viewing angle (which may be denoted as a first viewing angle). In the first viewing angle, one or more other vehicles (vehicles marked with black circles in FIG. 3) in front of the ego vehicle can be seen, but a complete view around the ego vehicle cannot be seen. In other words, in the first viewing angle, a view behind the ego vehicle cannot be seen, and content such as a distance between the ego vehicle and another vehicle or an obstacle cannot be seen.

Optionally, the driving viewing angle is a viewing angle that forms an included angle of A° with a horizontal direction, and the horizontal direction may be understood as a direction in which the ego vehicle moves forward.

Optionally, a value of A° may be any angle value greater than 0° and less than 30°, for example, 15°.

As shown in FIG. 3, in an example, when the 3D scene viewing angle is displayed on the in-vehicle infotainment display 300 of the ego vehicle, real-time mileage information, real-time battery information, road information, and the like may also be displayed on the in-vehicle infotainment display 300. Specifically, the mileage information may include current trip mileage information and current mileage information since last charge; the battery information may include current state of charge information and comprehensive state of charge information; and the road information may include current speed information, road speed limit information, navigation map information, and the like.

Optionally, a specific case in which the ego vehicle is in the low-speed traveling state and it is detected that no obstacle is present around the ego vehicle (or the ego vehicle is in the non-low-speed traveling state) may be as follows: The ego vehicle is in the non-low-speed traveling state and no obstacle is detected in a surrounding range of the ego vehicle, or the ego vehicle is in the non-low-speed traveling state and an obstacle is detected in a surrounding range of the ego vehicle. The non-low-speed traveling state may indicate that a vehicle speed of the ego vehicle is greater than or equal to 20 km/h, or a vehicle speed of the ego vehicle is greater than or equal to 30 km/h. Alternatively, a specific case may be as follows: The ego vehicle is in the low-speed traveling state, and no obstacle is detected in a surrounding range of the ego vehicle. The low-speed traveling state may indicate that a vehicle speed of the ego vehicle is less than 20 km/h, or a vehicle speed of the ego vehicle is less than 30 km/h.

Optionally, an ultrasonic radar may be used to detect whether an obstacle is present in the surrounding range of the ego vehicle.

Optionally, in an example, the surrounding range (that is, an obstacle monitoring area) of the ego vehicle may be a first area, the first area may be a rounded rectangular area centered on the ego vehicle, a long side of the rounded rectangular area is parallel to a vehicle door side of the ego vehicle, a length of a rounded rectangle is X1, a width of the rounded rectangle is X2, and radiuses of four rounded corners of the rounded rectangle are R. Values of X1, X2, and R may be determined based on a user input, may be automatically determined by a system, or may be determined based on road condition information. For example, X1=(200 cm+vehicle body length), X2=(100 cm+vehicle body width), and R=(50 cm+vehicle body diagonal length/2). This is not limited in this application.

In another example, optionally, that an obstacle is present around the ego vehicle may include that an obstacle is present in a range of a distance a from the front of the ego vehicle, may include that an obstacle is present in a range of a distance a from the rear of the ego vehicle, may include that an obstacle is present in a range of a distance b from a left side of the ego vehicle, may include that an obstacle is present in a range of a distance b from a right side of the ego vehicle, or may include that an obstacle is present in a range of a distance c from a left front corner (or a right front corner or a left rear corner or a right rear corner) of the ego vehicle. Values of a, b, and c may be the same, may be different from each other, or may be not completely the same. For example, a=100 cm, b=50 cm, and c=50 cm.

It should be understood that the diagram of the interface display corresponding to the 3D scene viewing angle provided in this embodiment of this application is merely an example for description. All diagrams of interfaces that can indicate that the 3D scene viewing angle displayed on the in-vehicle infotainment display is the driving viewing angle when it is detected that no obstacle is present in the surrounding range of the vehicle fall within the protection scope of this embodiment of this application.

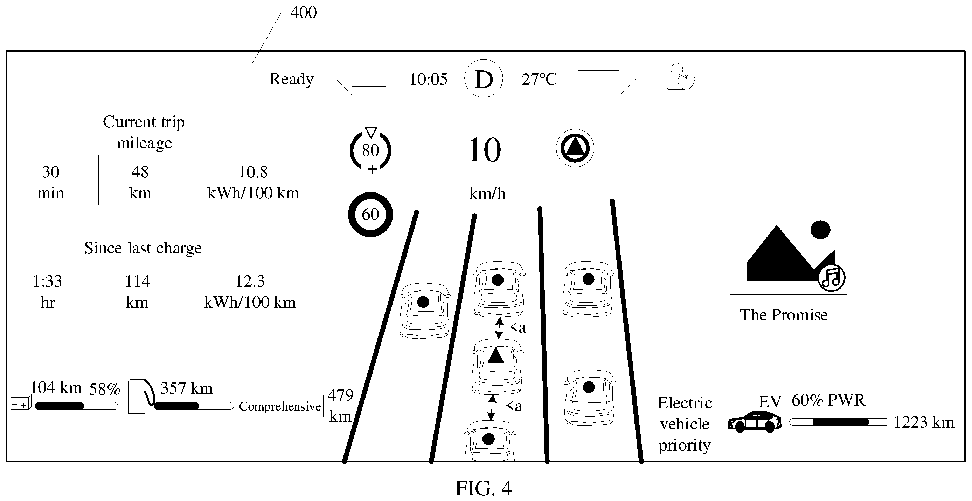

For example, FIG. 4 is a diagram of interface display corresponding to another 3D scene viewing angle according to an embodiment of this application.

In this embodiment, a vehicle marked with a black triangle represents an ego vehicle, and a vehicle marked with a black circle represents another vehicle. When the ego vehicle is in a low-speed traveling state and it is detected that an obstacle is present around the ego vehicle (for example, a distance between the ego vehicle and a preceding vehicle or a following vehicle is less than a), a 3D scene viewing angle displayed on an in-vehicle infotainment display 400 of the ego vehicle is shown in FIG. 4. The viewing angle is a slightly top-down viewing angle, and the viewing angle may be denoted as a second viewing angle. In the second viewing angle, a complete view around the ego vehicle can be seen, and an orientation and a distance of the obstacle around the ego vehicle can be seen.

Optionally, the second viewing angle is a viewing angle that forms an included angle of B° with the horizontal direction, a value of B° is greater than A° and less than 90°, and the horizontal direction may be understood as a direction in which the ego vehicle moves forward.

Optionally, the value of B° may be any angle value greater than or equal to 30° and less than 90°, for example, 45°.

As shown in FIG. 4, in an example, when the 3D scene viewing angle is displayed on the in-vehicle infotainment display 400 of the ego vehicle, real-time mileage information, real-time battery information, road information, and the like are also displayed on the in-vehicle infotainment display 400. Specifically, the mileage information may include current trip mileage information and current mileage information since last charge; the battery information may include current state of charge information and comprehensive state of charge information; and the road information may include current speed information, road speed limit information, navigation map information, and the like.

Optionally, that the ego vehicle is in the low-speed traveling state may be as follows: A vehicle speed of the ego vehicle is less than 20 km/h, or a vehicle speed of the ego vehicle is less than 30 km/h.

Optionally, an ultrasonic radar may be used to detect whether an obstacle is present in a surrounding range of the ego vehicle.

Optionally, in an example, the surrounding range (that is, an obstacle monitoring area) of the ego vehicle may be a first area, the first area may be a rounded rectangular area centered on the ego vehicle, a long side of the rounded rectangular area is parallel to a vehicle door side of the ego vehicle, a length of a rounded rectangle is X1, a width of the rounded rectangle is X2, and radiuses of four rounded corners of the rounded rectangle are R. Values of X1, X2, and R may be determined based on a user input, may be automatically determined by a system, or may be determined based on road condition information. For example, X1=(200 cm+vehicle body length), X2=(100 cm+vehicle body width), and R=(50 cm+vehicle body diagonal length/2). This is not limited in this application.

In another example, optionally, that an obstacle is present around the ego vehicle may include that an obstacle is present in a range of a distance a from the front of the ego vehicle, may include that an obstacle is present in a range of a distance a from the rear of the ego vehicle, may include that an obstacle is present in a range of a distance b from a left side of the ego vehicle, may include that an obstacle is present in a range of a distance b from a right side of the ego vehicle, or may include that an obstacle is present in a range of a distance c from a left front corner (or a right front corner or a left rear corner or a right rear corner) of the ego vehicle. Values of a, b, and c may be the same, may be different from each other, or may be not completely the same. For example, a=100 cm, b=50 cm, and c=50 cm.

It should be understood that the diagram of the interface display corresponding to the 3D scene viewing angle provided in this embodiment of this application is merely an example for description. All diagrams of interfaces that can indicate that the 3D scene viewing angle displayed on the in-vehicle infotainment display is the second viewing angle when the vehicle is in a low-speed state and it is detected that an obstacle is present in the surrounding range of the vehicle fall within the protection scope of this embodiment of this application.

It may be understood that, in a case, switching may be implemented between the embodiment shown in FIG. 3 and the embodiment shown in FIG. 4. For example, when a current vehicle is a low-speed traveling state and it is detected that no obstacle is present around the vehicle (or the current vehicle is in a non-low-speed traveling state), a 3D scene viewing angle displayed on an in-vehicle infotainment display of the vehicle is the first viewing angle shown in FIG. 3. When a status of the vehicle changes to the low-speed traveling state and it is detected that an obstacle is present around the vehicle, the 3D scene viewing angle displayed on the in-vehicle infotainment display of the vehicle is switched from the first viewing angle shown in FIG. 3 to the second viewing angle shown in FIG. 4, so that a user can better observe the obstacle around the vehicle.

Further, when the status of the vehicle changes to the non-low-speed traveling state, the 3D scene viewing angle displayed on the in-vehicle infotainment display of the vehicle is restored from the second viewing angle shown in FIG. 4 to the first viewing angle shown in FIG. 3. Alternatively, when it is detected that no obstacle is present around the vehicle, the 3D scene viewing angle displayed on the in-vehicle infotainment display of the vehicle is restored from the second viewing angle shown in FIG. 4 to the first viewing angle shown in FIG. 3.

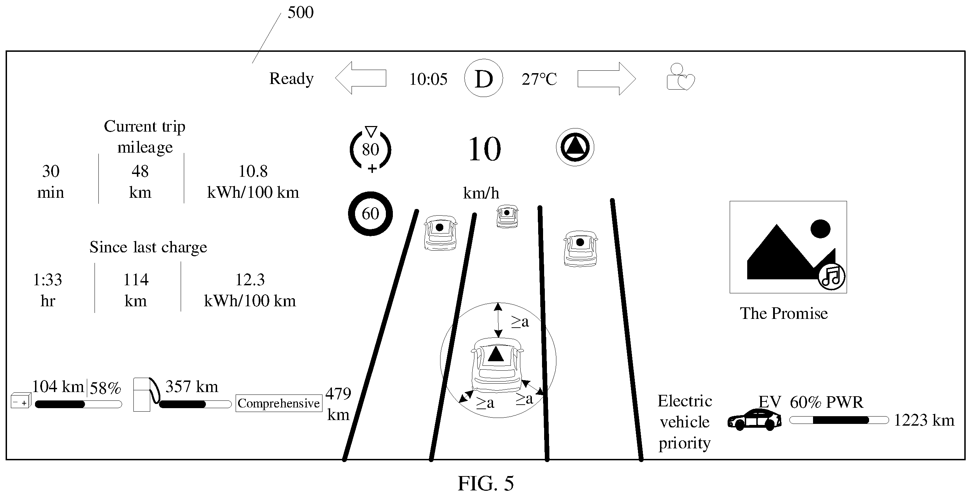

Based on the embodiment shown in FIG. 4, for example, FIG. 5 is a diagram of interface display corresponding to another 3D scene viewing angle according to an embodiment of this application.

In this embodiment, a vehicle marked with a black triangle represents an ego vehicle, and a vehicle marked with a black circle represents another vehicle. When a status of the ego vehicle is switched from a low-speed traveling state with a detected obstacle present around the ego vehicle to a low-speed traveling state with no detected obstacle present around the ego vehicle (that is, it is detected that the obstacle present around the ego vehicle disappears), a 3D scene viewing angle displayed on an in-vehicle infotainment display 500 of the ego vehicle is shown in FIG. 5.

It can be learned from FIG. 5 that, when the ego vehicle is in the low-speed state, and a second viewing angle is displayed on the in-vehicle infotainment display 500 because it is detected that the obstacle is present around the ego vehicle, when it is detected that the obstacle present around the ego vehicle disappears (that is, it is detected that no obstacle is present around the vehicle, for example, no obstacle is present in a range of a distance a from the ego vehicle) but the ego vehicle is still in the low-speed traveling state, the 3D scene viewing angle displayed on the in-vehicle infotainment display 500 of the ego vehicle remains as the second viewing angle and is not restored to a first viewing angle.

In an example, when the ego vehicle is in the low-speed state, and the second viewing angle is displayed on the in-vehicle infotainment display because it is detected that the obstacle is present around the ego vehicle, when it is detected that a vehicle speed of the ego vehicle is switched from the low-speed state to a non-low-speed state, the 3D scene viewing angle displayed on the in-vehicle infotainment display of the ego vehicle is restored from the second viewing angle to the first viewing angle.

It may be understood that whether the vehicle is restored from the second viewing angle to the first viewing angle depends on whether a speed of the vehicle falls out of the low-speed traveling state, and is irrelevant to whether an obstacle is present around the vehicle.

Optionally, the first viewing angle is a viewing angle that forms an included angle of A° with a horizontal direction, and the horizontal direction may be understood as a direction in which the ego vehicle moves forward.

Optionally, a value of A° may be any angle value greater than 0° and less than 30°, for example, 15°.

Optionally, the second viewing angle is a viewing angle that forms an included angle of B° with the horizontal direction, a value of B° is greater than A° and less than 90°, and the horizontal direction may be understood as the direction in which the ego vehicle moves forward.

Optionally, the value of B° may be any angle value greater than or equal to 30° and less than 90°, for example, 45°.

As shown in FIG. 5, in an example, when the 3D scene viewing angle is displayed on the in-vehicle infotainment display 500 of the ego vehicle, real-time mileage information, real-time battery information, road information, and the like are also displayed on the in-vehicle infotainment display 500. Specifically, the mileage information may include current trip mileage information and current mileage information since last charge; the battery information may include current state of charge information and comprehensive state of charge information; and the road information may include current speed information, road speed limit information, navigation map information, and the like.

Optionally, that the ego vehicle is in the low-speed traveling state may be as follows: The vehicle speed of the ego vehicle is less than 20 km/h, or the vehicle speed of the ego vehicle is less than 30 km/h.

Optionally, an ultrasonic radar may be used to detect whether an obstacle is present in a surrounding range of the ego vehicle.

It should be understood that the diagram of the interface display corresponding to the 3D scene viewing angle provided in this embodiment of this application is merely an example for description. All diagrams of interfaces that can indicate that the 3D scene viewing angle displayed on the in-vehicle infotainment display remains unchanged when the vehicle is in the low-speed state and it is detected that no obstacle is present in the surrounding range of the vehicle (that is, all solutions in which a speed threshold is used to determine whether to switch the viewing angle) fall within the protection scope of this embodiment of this application.

It may be understood that, in a case, switching may be implemented between the embodiment shown in FIG. 3, the embodiment shown in FIG. 4, and the embodiment shown in FIG. 5. For example, when a current vehicle is a low-speed traveling state and it is detected that no obstacle is present around the vehicle (or the current vehicle is in a non-low-speed traveling state), a 3D scene viewing angle displayed on an in-vehicle infotainment display of the vehicle is the first viewing angle shown in FIG. 3. When a status of the vehicle changes to the low-speed traveling state and it is detected that an obstacle is present around the vehicle, the 3D scene viewing angle displayed on the in-vehicle infotainment display of the vehicle is switched from the first viewing angle shown in FIG. 3 to the second viewing angle shown in FIG. 4, so that a user can better observe the obstacle around the vehicle. When the status of the vehicle remains as the low-speed traveling state, but it is detected that the obstacle present around the vehicle disappears (that is, it is detected that no obstacle is present around the vehicle), the 3D scene viewing angle displayed on the in-vehicle infotainment display of the vehicle remains as the second viewing angle shown in FIG. 5, to avoid affecting user experience due to frequent switching of the viewing angle. When the status of the vehicle falls out of the low-speed traveling state (which may also be understood as that a speed of the vehicle is greater than or equal to a specific speed threshold or exceeds a specific speed range), the 3D scene viewing angle displayed on the in-vehicle infotainment display of the vehicle is restored from the second viewing angle shown in FIG. 5 to the first viewing angle shown in FIG. 3.

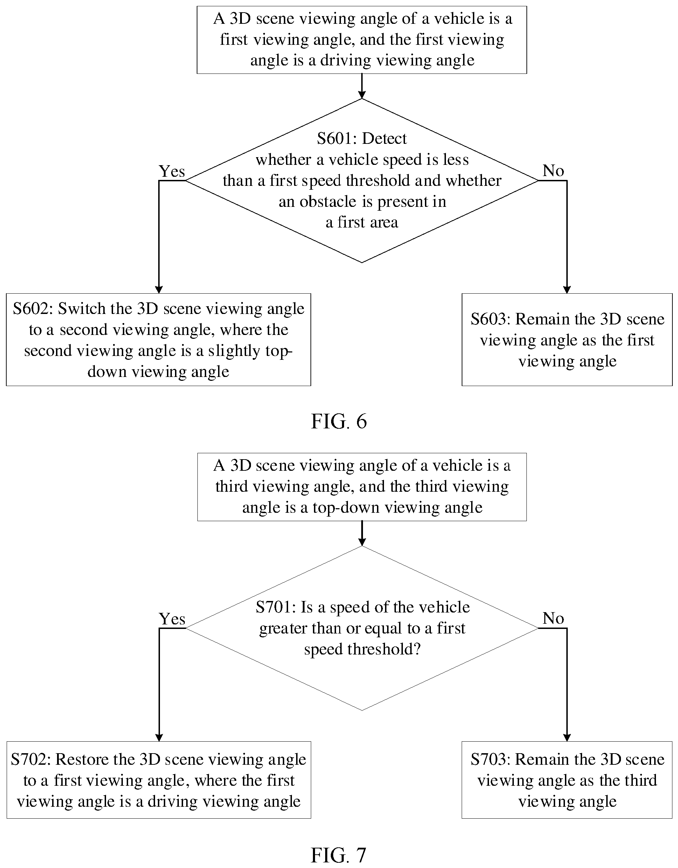

For example, with reference to FIG. 6 to FIG. 10, the following describes the viewing angle switching method provided in embodiments of this application.

For example, FIG. 6 is a schematic flowchart of a viewing angle switching method 600 according to an embodiment of this application. As shown in FIG. 6, a 3D scene viewing angle currently displayed on a display of a vehicle is a first viewing angle, and the first viewing angle is a driving viewing angle. The method 600 includes the following steps.

S601: Determine whether a vehicle speed is less than a first speed threshold and whether an obstacle is present in a first area; and if yes, perform step S602; or if no, perform step S603.

Optionally, the first viewing angle is a viewing angle that forms an included angle of A° with a horizontal direction, and the horizontal direction may be understood as a direction in which the vehicle moves forward.

Optionally, a value range of A° is less than 90°. In an example, a value of A° may be any angle value greater than 0° and less than 30°, for example, 10° or 15°.

In an example, for the first viewing angle displayed on the in-vehicle infotainment display of the vehicle, refer to the descriptions of the driving viewing angle in the embodiment shown in FIG. 3.

Optionally, step S601 may also be described as follows: Determine whether the vehicle speed is within a low-speed range and whether an obstacle is present in the first area; and if yes, perform step S602; or if no, perform step S603. The low-speed range may be, for example, 0 km/h to 20 km/h, 10 km/h to 20 km/h, 10 km/h to 30 km/h, or 0 km/h to 30 km/h; may be any speed range determined based on a user input; or may be a speed range automatically determined by a system. This is not limited in this application.

It may be further understood that the first speed threshold may be a specific speed value, for example, 10 km/h, 15 km/h, or 30 km/h; may be any speed value determined based on a user input; or may be a speed value automatically determined by the system. This is not limited in this application. Alternatively, the first speed threshold may be a speed range, for example, 5 km/h to 20 km/h, 10 km/h to 20 km/h, or 10 km/h to 30 km/h; may be any speed range determined based on a user input; or may be a speed range automatically determined by the system. This is not limited in this application.

The first area may be understood as a surrounding area of the vehicle.

Optionally, an ultrasonic radar may be used to determine whether an obstacle is present in the first area of the vehicle.

Optionally, in an example, the first area may be a rounded rectangular area centered on the ego vehicle, a long side of the rounded rectangular area is parallel to a vehicle door side of the ego vehicle, a length of a rounded rectangle is X1, a width of the rounded rectangle is X2, and radiuses of four rounded corners of the rounded rectangle are R. Values of X1, X2, and R may be determined based on a user input, may be automatically determined by the system, or may be determined based on road condition information. For example, X1=(200 cm+vehicle body length), X2=(100 cm+vehicle body width), and R=(50 cm+vehicle body diagonal length/2). This is not limited in this application.

In another example, optionally, that an obstacle is present in the first area may include that an obstacle is present in a range of a distance a from the front of the ego vehicle, may include that an obstacle is present in a range of a distance a from the rear of the ego vehicle, may include that an obstacle is present in a range of a distance b from a left side of the ego vehicle, may include that an obstacle is present in a range of a distance b from a right side of the ego vehicle, or may include that an obstacle is present in a range of a distance c from a left front corner (or a right front corner or a left rear corner or a right rear corner) of the ego vehicle. Values of a, b, and c may be the same, may be different from each other, or may be not completely the same. For example, a=100 cm, b=50 cm, and c=50 cm.

S602: Switch the 3D scene viewing angle displayed on the in-vehicle infotainment display to a second viewing angle, where the second viewing angle is a slightly top-down viewing angle.

Optionally, the second viewing angle is a viewing angle that forms an included angle of B° with the horizontal direction, a value of B° is greater than A° and less than 90°, and the horizontal direction may be understood as the direction in which the vehicle moves forward.

Optionally, the value of B° may be any angle value greater than or equal to 30° and less than 90°, for example, 45°.

For more detailed descriptions of the second viewing angle, refer to the descriptions of the second viewing angle in the embodiment shown in FIG. 4 or FIG. 5.

S603: Remain the 3D scene viewing angle displayed on the in-vehicle infotainment display as the first viewing angle.

In this embodiment of this application, when the vehicle is in a low-speed traveling state and it is detected that an obstacle is present around the vehicle, the 3D scene viewing angle displayed on the in-vehicle infotainment display is switched from the driving viewing angle to the slightly top-down viewing angle. In this way, a user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

For example, FIG. 7 is a schematic flowchart of another viewing angle switching method 700 according to an embodiment of this application. As shown in FIG. 7, a 3D scene viewing angle currently displayed on a display of a vehicle is a third viewing angle, and the third viewing angle is a top-down viewing angle. The method 700 includes the following steps.

S701: Determine whether a speed of the vehicle is greater than or equal to a first speed threshold, and if yes, perform step S702; or if no, perform step S703.

Optionally, step S701 may also be described as follows: Determine whether the speed of the vehicle falls out of a low-speed range; and if yes, perform step S702; or if no, perform step S703. The low-speed range may be, for example, 0 km/h to 20 km/h, 10 km/h to 20 km/h, 10 km/h to 30 km/h, or 0 km/h to 30 km/h; may be any speed range determined based on a user input; or may be a speed range automatically determined by a system. This is not limited in this application.

It may be further understood that the first speed threshold may be a specific speed value, for example, 10 km/h, 15 km/h, or 30 km/h; may be any speed value determined based on a user input; or may be a speed value automatically determined by the system. This is not limited in this application. Alternatively, the first speed threshold may be a speed range, for example, 5 km/h to 20 km/h, 10 km/h to 20 km/h, 10 km/h to 30 km/h, or 0 km/h to 30 km/h; may be any speed range determined based on a user input; or may be a speed range automatically determined by the system. This is not limited in this application.

The first speed threshold in this embodiment is the same as the first speed threshold in the embodiment shown in FIG. 6.

S702: Restore the 3D scene viewing angle displayed on the in-vehicle infotainment display to a first viewing angle, where the first viewing angle is a driving viewing angle.

Optionally, the first viewing angle is a viewing angle that forms an included angle of A° with a horizontal direction, and the horizontal direction may be understood as a direction in which the vehicle moves forward.

Optionally, a value of A° may be any angle value greater than 0° and less than 30°, for example, 10° or 15°.

In an example, for the first viewing angle displayed on the in-vehicle infotainment display of the vehicle, refer to the descriptions of the driving viewing angle in the embodiment shown in FIG. 3.

S703: Remain the 3D scene viewing angle as the third viewing angle.

Optionally, the third viewing angle is a viewing angle that forms an angle of C° with the horizontal direction.

In an example, a value of C° is equal to 90°.

In another example, the value of C° may be any angle value greater than or equal to 30° and less than 90°, for example, 45°. It may also be understood that in this example, the third viewing angle may include a second viewing angle.

Optionally, the second viewing angle is a viewing angle that forms an included angle of B° with the horizontal direction, a value of B° is greater than A° and less than 90°, and the horizontal direction may be understood as the direction in which the vehicle moves forward.

Optionally, the value of B° may be any angle value greater than or equal to 30° and less than 90°, for example, 45°.

For more detailed descriptions of the second viewing angle, refer to the descriptions of the second viewing angle in the embodiment shown in FIG. 4 or FIG. 5.

It may be understood that in this embodiment of this application, a speed threshold in a trigger condition for restoring the second viewing angle to the first viewing angle is the same as a speed threshold in a trigger condition for switching the first viewing angle to the second viewing angle, and the speed thresholds are both the first speed threshold.

In this embodiment of this application, a vehicle speed threshold is set as a necessary condition for restoring the 3D scene viewing angle displayed on the display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for a user to observe a situation around the vehicle in real time. The method can avoid frequent changes of the 3D scene viewing angle displayed on the display that are caused by low-speed obstacle alerts in a traveling process of the vehicle, and therefore improve user experience.

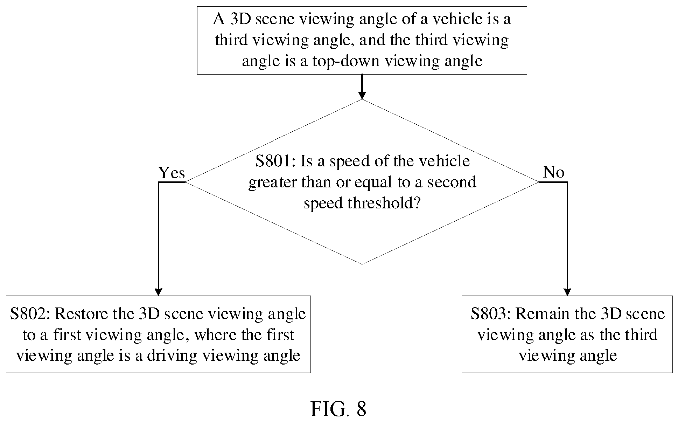

For example, FIG. 8 is a schematic flowchart of another viewing angle switching method 800 according to an embodiment of this application. As shown in FIG. 8, a 3D scene viewing angle currently displayed on a display of a vehicle is a third viewing angle, and the third viewing angle is a top-down viewing angle. The method 800 includes the following steps.

S801: Determine whether a speed of the vehicle is greater than or equal to a second speed threshold, and if yes, perform step S802; or if no, perform step S803.

The second speed threshold is greater than the first speed threshold in the embodiment shown in FIG. 7.

It may be further understood that
the first speed threshold may be a specific speed value, for example, 10 km/h, 15 km/h, or 30 km/h; may be any speed value determined based on a user input; or may be a speed value automatically determined by a system. This is not limited in this application. Alternatively, the first speed threshold may be a speed range, for example, 5 km/h to 20 km/h, 10 km/h to 20 km/h, 10 km/h to 30 km/h, or 0 km/h to 30 km/h; may be any speed range determined based on a user input; or may be a speed range automatically determined by a system. This is not limited in this application.

When the first speed threshold is a specific speed value, the second speed threshold may be any low speed value greater than the first speed threshold. For example, if the first speed threshold is 10 km/h, the second speed threshold may be any value greater than 10 km/h and less than or equal to 30 km/h. When the first speed threshold is a speed range, the second speed threshold may be any low speed range greater than the first speed threshold. For example, if the first speed threshold is 5 km/h to 20 km/h, the second speed threshold may be 5 km/h to 30 km/h, or may be 20 km/h to 30 km/h.

S802: Restore the 3D scene viewing angle displayed on the in-vehicle infotainment display to a first viewing angle, where the first viewing angle is a driving viewing angle.

An explanation of this step is the same as an explanation of step S702 in the embodiment shown in FIG. 7. For brevity, details are not described herein again.

S803: Remain the 3D scene viewing angle as the third viewing angle.

An explanation of this step is the same as an explanation of step S703 in the embodiment shown in FIG. 7. For brevity, details are not described herein again.

It may be understood that in this embodiment of this application, a speed threshold in a trigger condition for restoring a second viewing angle to the first viewing angle is greater than a speed threshold in a trigger condition for switching the first viewing angle to the second viewing angle.

In this embodiment of this application, a vehicle speed threshold is set as a necessary condition for restoring the 3D scene viewing angle displayed on the display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for a user to observe a situation around the vehicle in real time. In addition, in the method, the speed threshold in the trigger condition for restoring the second viewing angle to the first viewing angle is greater than the speed threshold in the trigger condition for switching the first viewing angle to the second viewing angle. In this way, not only frequent changes of the 3D scene viewing angle displayed on the display that are caused by obstacle alerts in a low-speed traveling process of the vehicle can be avoided, but also the frequency of changing the viewing angle can be further reduced, so that user experience is further improved.

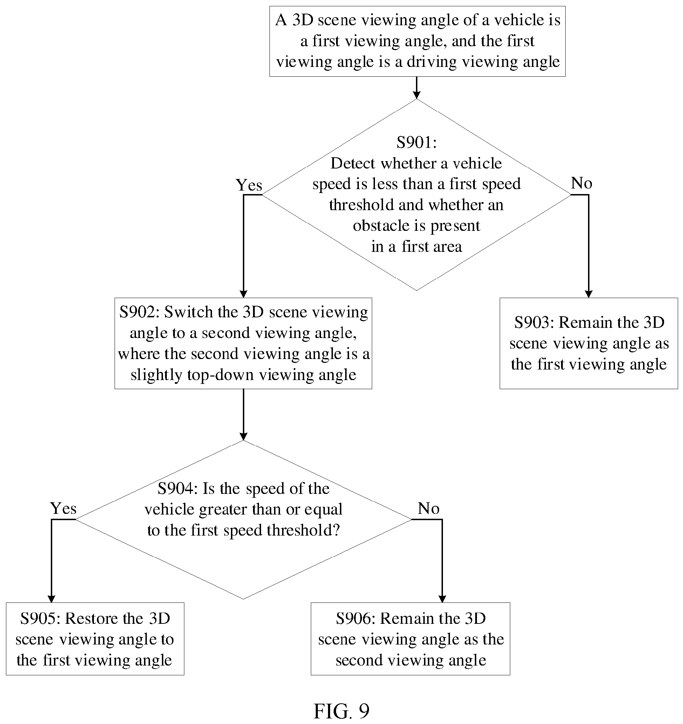

For example, FIG. 9 is a schematic flowchart of another viewing angle switching method 900 according to an embodiment of this application. As shown in FIG. 9, a 3D scene viewing angle currently displayed on a display of a vehicle is a first viewing angle, and the first viewing angle is a driving viewing angle. The method 900 includes the following steps.

S901: Determine whether a vehicle speed is less than a first speed threshold and whether an obstacle is present in a first area; and if yes, perform step S902; or if no, perform step S903.

An explanation of step S901 is the same as an explanation of step S601 in the embodiment shown in FIG. 6. For brevity, details are not described herein again.

S902: Switch the 3D scene viewing angle displayed on the in-vehicle infotainment display to a second viewing angle, and further perform step S904, where the second viewing angle is a slightly top-down viewing angle.

An explanation of step S902 is the same as an explanation of step S602 in the embodiment shown in FIG. 6. For brevity, details are not described herein again.

S903: Remain the 3D scene viewing angle displayed on the in-vehicle infotainment display as the first viewing angle.

S904: Determine whether the speed of the vehicle is greater than or equal to the first speed threshold, and if yes, perform step S905; or if no, perform step S906.

An explanation of step S904 is the same as an explanation of step S701 in the embodiment shown in FIG. 7. For brevity, details are not described herein again.

S905: Restore the 3D scene viewing angle displayed on the in-vehicle infotainment display to the first viewing angle, where the first viewing angle is the driving viewing angle.

An explanation of step S905 is the same as an explanation of step S702 in the embodiment shown in FIG. 7. For brevity, details are not described herein again.

S906: Remain the 3D scene viewing angle as a third viewing angle.

An explanation of step S906 is the same as an explanation of step S703 in the embodiment shown in FIG. 7. For brevity, details are not described herein again.

It may be understood that in this embodiment of this application, a speed threshold in a trigger condition for restoring the second viewing angle to the first viewing angle is the same as a speed threshold in a trigger condition for switching the first viewing angle to the second viewing angle, and the speed thresholds are both the first speed threshold.

In this embodiment of this application, when the vehicle is in a low-speed traveling state and it is detected that an obstacle is present around the vehicle, the 3D scene viewing angle displayed on the in-vehicle infotainment display is switched from the driving viewing angle to the slightly top-down viewing angle. In this way, a user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

In addition, in the method, a vehicle speed threshold is set as a necessary condition for restoring the 3D scene viewing angle displayed on the display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for the user to observe a situation around the vehicle in real time. The method can avoid frequent changes of the 3D scene viewing angle displayed on the display that are caused by low-speed obstacle alerts in a traveling process of the vehicle, and therefore improve user experience.

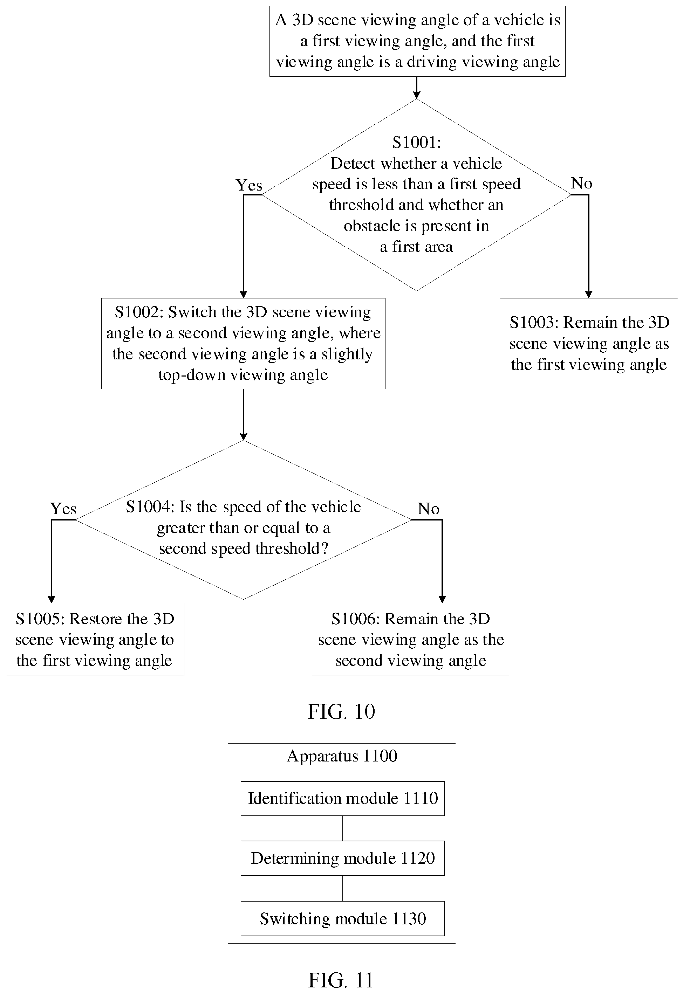

For example, FIG. 10 is a schematic flowchart of another viewing angle switching method 1000 according to an embodiment of this application. As shown in FIG. 10, a 3D scene viewing angle currently displayed on a display of a vehicle is a first viewing angle, and the first viewing angle is a driving viewing angle. The method 1000 includes the following steps.

S1001: Determine whether a vehicle speed is less than a first speed threshold and whether an obstacle is present in a first area; and if yes, perform step S1002; or if no, perform step S1003.

An explanation of step S1001 is the same as an explanation of step S601 in the embodiment shown in FIG. 6. For brevity, details are not described herein again.

S1002: Switch the 3D scene viewing angle displayed on the in-vehicle infotainment display to a second viewing angle, and further perform step S1004, where the second viewing angle is a slightly top-down viewing angle.

An explanation of step S1002 is the same as an explanation of step S602 in the embodiment shown in FIG. 6. For brevity, details are not described herein again.

S1003: Remain the 3D scene viewing angle displayed on the in-vehicle infotainment display as the first viewing angle.

S1004: Determine whether the speed of the vehicle is greater than or equal to a second speed threshold, and if yes, perform step S1005; or if no, perform step S1006.

An explanation of step S1004 is the same as an explanation of step S801 in the embodiment shown in FIG. 8. For brevity, details are not described herein again.

S1005: Restore the 3D scene viewing angle displayed on the in-vehicle infotainment display to the first viewing angle, where the first viewing angle is the driving viewing angle.

An explanation of step S1005 is the same as an explanation of step S802 in the embodiment shown in FIG. 8. For brevity, details are not described herein again.

S1006: Remain the 3D scene viewing angle as a third viewing angle.

An explanation of step S1006 is the same as an explanation of step S803 in the embodiment shown in FIG. 8. For brevity, details are not described herein again.

It may be understood that in this embodiment of this application, a speed threshold in a trigger condition for restoring the second viewing angle to the first viewing angle is greater than a speed threshold in a trigger condition for switching the first viewing angle to the second viewing angle.

In this embodiment of this application, when the vehicle is in a low-speed traveling state and it is detected that an obstacle is present around the vehicle, the 3D scene viewing angle displayed on the in-vehicle infotainment display is switched from the driving viewing angle to the slightly top-down viewing angle. In this way, a user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

In addition, a vehicle speed threshold is set as a necessary condition for restoring the 3D scene viewing angle displayed on the display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for the user to observe a situation around the vehicle in real time. In addition, in the method, the speed threshold in the trigger condition for restoring the second viewing angle to the first viewing angle is greater than the speed threshold in the trigger condition for switching the first viewing angle to the second viewing angle. In this way, not only frequent changes of the 3D scene viewing angle displayed on the display that are caused by low-speed obstacle alerts in a traveling process of the vehicle can be avoided, but also the frequency of changing the viewing angle can be further reduced, so that user experience is further improved.

For example, FIG. 11 is a block diagram of a viewing angle switching apparatus 1100 according to an embodiment of this application. As shown in FIG. 11, the apparatus 1100 includes the following modules.

An identification module 1110 is configured to identify a vehicle speed of a vehicle, and is further configured to identify whether an obstacle is present in a first area of the vehicle.

The first area may be understood as a surrounding area of the vehicle.

Optionally, in an example, the first area may be a rounded rectangular area centered on the ego vehicle, a long side of the rounded rectangular area is parallel to a vehicle door side of the ego vehicle, a length of a rounded rectangle is X1, a width of the rounded rectangle is X2, and radiuses of four rounded corners of the rounded rectangle are R. Values of X1, X2, and R may be determined based on a user input, may be automatically determined by a system, or may be determined based on road condition information. For example, X1=(200 cm+vehicle body length), X2=(100 cm+vehicle body width), and R=(50 cm+vehicle body diagonal length/2). This is not limited in this application.

In another example, optionally, that an obstacle is present in the first area may include that an obstacle is present in a range of a distance a from the front of the ego vehicle, may include that an obstacle is present in a range of a distance a from the rear of the ego vehicle, may include that an obstacle is present in a range of a distance b from a left side of the ego vehicle, may include that an obstacle is present in a range of a distance b from a right side of the ego vehicle, or may include that an obstacle is present in a range of a distance c from a left front corner (or a right front corner or a left rear corner or a right rear corner) of the ego vehicle. Values of a, b, and c may be the same, may be different from each other, or may be not completely the same. For example, a=100 cm, b=50 cm, and c=50 cm.

A determining module 1120 is configured to determine whether the vehicle speed is less than a first speed threshold and whether an obstacle is present in the first area.

It may be understood that the first speed threshold may be a specific speed value, for example, 10 km/h, 15 km/h, or 30 km/h; may be any speed value determined based on a user input; or may be a speed value automatically determined by the system. This is not limited in this application. Alternatively, the first speed threshold may be a speed range, for example, 5 km/h to 20 km/h, 10 km/h to 20 km/h, or 10 km/h to 30 km/h; may be any speed range determined based on a user input; or may be a speed range automatically determined by the system. This is not limited in this application.

A switching module 1130 is configured to: when the vehicle speed is less than the first speed threshold and an obstacle is present in the first area, switch a 3D scene viewing angle displayed on an in-vehicle infotainment display from a first viewing angle to a second viewing angle, where the first viewing angle is a driving viewing angle, and the second viewing angle is a slightly top-down viewing angle.

Optionally, the first viewing angle is a viewing angle that forms an included angle of A° with a horizontal direction, and the horizontal direction may be understood as a direction in which the vehicle moves forward.

Optionally, a value of A° may be any angle value greater than 0° and less than 30°, for example, 10° or 15°.

In an example, for the first viewing angle displayed on the in-vehicle infotainment display of the vehicle, refer to the descriptions of the driving viewing angle in the embodiment shown in FIG. 3.

Optionally, the second viewing angle is a viewing angle that forms an included angle of B° with the horizontal direction, a value of B° is greater than A° and less than 90°, and the horizontal direction may be understood as the direction in which the vehicle moves forward.

Optionally, the value of B° may be any angle value greater than or equal to 30° and less than 90°, for example, 45°.

For more detailed descriptions of the second viewing angle, refer to the descriptions of the second viewing angle in the embodiment shown in FIG. 4 or FIG. 5.

In this embodiment of this application, when the vehicle is in a low-speed traveling state and it is detected that an obstacle is present around the vehicle, the 3D scene viewing angle displayed on the in-vehicle infotainment display is switched from the driving viewing angle to the slightly top-down viewing angle. In this way, a user can identify an orientation and a distance of the obstacle through viewing angle switching, and a degree of viewing angle change in the process is reduced to avoid a great viewing angle change. Therefore, visual impact caused by viewing angle switching on the user is reduced, and visual effect perceived by the user and user experience are improved.

In another embodiment, a 3D scene viewing angle currently displayed on a display of a vehicle is a third viewing angle, and the third viewing angle is a top-down viewing angle.

The determining module 1120 is further configured to determine whether a speed of the vehicle is greater than or equal to a first speed threshold.

Optionally, it may also be described as follows: The determining module 1120 is further configured to determine whether the speed of the vehicle falls out of a low-speed range. The low-speed range may be, for example, 0 km/h to 20 km/h, 10 km/h to 20 km/h, 10 km/h to 30 km/h, or 0 km/h to 30 km/h; may be any speed range determined based on a user input; or may be a speed range automatically determined by a system. This is not limited in this application.

An understanding of the first speed threshold is the same as an explanation of the first speed threshold in the embodiment shown in FIG. 11. For brevity, details are not described herein again.

The switching module 1130 is further configured to: when the speed of the vehicle is greater than or equal to the first speed threshold, restore the 3D scene viewing angle displayed on the in-vehicle infotainment display from the third viewing angle to a first viewing angle. The third viewing angle is the top-down viewing angle, and the first viewing angle is a driving viewing angle.

Optionally, the first viewing angle is a viewing angle that forms an included angle of A° with a horizontal direction, and the horizontal direction may be understood as a direction in which the vehicle moves forward.

Optionally, a value of A° may be any angle value greater than 0° and less than 30°, for example, 10° or 15°.

In an example, for the first viewing angle displayed on the in-vehicle infotainment display of the vehicle, refer to the descriptions of the driving viewing angle in the embodiment shown in FIG. 3.

Optionally, the third viewing angle is a viewing angle that forms an angle of C° with the horizontal direction.

In an example, a value of C° is equal to 90°.

In another example, the value of C° may be any angle value greater than or equal to 30° and less than 90°, for example, 45°. It may also be understood that in this example, the third viewing angle may include a second viewing angle.

Optionally, the second viewing angle is a viewing angle that forms an included angle of B° with the horizontal direction, a value of B° is greater than A° and less than 90°, and the horizontal direction may be understood as the direction in which the vehicle moves forward.

Optionally, the value of B° may be any angle value greater than or equal to 30° and less than 90°, for example, 45°.

For more detailed descriptions of the second viewing angle, refer to the descriptions of the second viewing angle in the embodiment shown in FIG. 4 or FIG. 5.

In this embodiment of this application, a vehicle speed threshold is set as a necessary condition for restoring the 3D scene viewing angle displayed on the display of the vehicle from the top-down viewing angle to the driving viewing angle, so that whether an obstacle is present around the vehicle is no longer a switching condition of viewing angle switching. This greatly reduces a frequency of changing the 3D scene viewing angle, and enables the 3D scene viewing angle to remain unchanged when the vehicle is in a low-speed state (for example, the vehicle is in a congestion state), so that it is convenient for a user to observe a situation around the vehicle in real time. The apparatus can avoid frequent changes of the 3D scene viewing angle displayed on the display that are caused by low-speed obstacle alerts in a traveling process of the vehicle, and therefore improve user experience.

An embodiment of this application further provides a computer-readable medium. The computer-readable medium stores program code. When the computer program code is run on a computer, the computer is enabled to perform any method in FIG. 6 to FIG. 10.

An embodiment of this application further provides a chip. The chip includes at least one processor and a memory. The at least one processor is coupled to the memory, and is configured to read and execute instructions in the memory to perform any method in FIG. 6 to FIG. 10.

An embodiment of this application further provides a vehicle. The vehicle includes at least one processor and a memory. The at least one processor is coupled to the memory, and is configured to read and execute instructions in the memory to perform any method in FIG. 6 to FIG. 10.

The foregoing embodiments may be used separately, or may be used in combination to implement different technical effect.

In embodiments provided in this application, the method provided in embodiments of this application is described from a perspective in which an electronic device (for example, an in-vehicle infotainment system) serves as an execution body. To implement functions in the method provided in embodiments of this application, the electronic device may include a hardware structure and/or a software module, and the functions are implemented in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

An embodiment of this application further provides an electronic device. The electronic device includes a display, a processor, a memory, a power button, an application, and a computer program. The foregoing devices may be connected through one or more communication buses. One or more computer programs are stored in the memory and are configured to be executed by one or more processors. The one or more computer programs include instructions, and the instructions may be used to enable the electronic device to perform any method in FIG. 6 to FIG. 10.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments, the electronic device may be divided into functional modules based on the foregoing method examples. For example, each functional module may be obtained through division based on each corresponding function, or two or more functions may be integrated into one processing module. The integrated module may be implemented in a form of hardware. It should be noted that, in embodiments, division into the modules is an example and is merely logical function division, and may be other division during actual implementation.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application should fall within the protection scope of this application. Therefore, the protection scope of this application shall be subject to the protection scope of the claims.

## Claims

1. A viewing angle switching method, wherein the method comprises:
when detecting that a speed of a vehicle is greater than or equal to a first threshold, switching a three-dimensional scene viewing angle of the vehicle from a top-down viewing angle to a first viewing angle, wherein the first viewing angle is a driving viewing angle, the first viewing angle is a viewing angle that forms a first included angle with a horizontal direction, and the first included angle is less than 90°.

2. The method according to claim 1, wherein the method further comprises:
when detecting that the speed of the vehicle is less than a second threshold and an obstacle is present in a first area in which the vehicle is located, switching the three-dimensional scene viewing angle of the vehicle from the first viewing angle to a second viewing angle, wherein the second viewing angle is a viewing angle that forms a second included angle with the horizontal direction, the second included angle is greater than the first included angle, and the second included angle is less than 90°.

3. The method according to claim 2, wherein the first threshold is greater than the second threshold.

4. The method according to claim 2, wherein the first threshold is equal to the second threshold.

5. The method according to any one of claims 2 to 4, wherein the method further comprises:
if the speed of the vehicle remains in a state of being less than the second threshold, maintaining the three-dimensional scene viewing angle of the vehicle as the second viewing angle.

6. The method according to claim 5, wherein no obstacle is present in the first area.

7. The method according to any one of claims 2 to 6, wherein the first included angle is equal to 15°.

8. The method according to any one of claims 2 to 7, wherein the second included angle is equal to 30°, the second included angle is equal to 45°, or the second included angle is equal to 60°.

9. The method according to any one of claims 1 to 8, wherein the first threshold is 30 km/h.

10. The method according to any one of claims 2 to 8, wherein the first area is a rounded rectangular area centered on the vehicle, and a long side of the rounded rectangular area is parallel to a vehicle door side of the vehicle.

11. A viewing angle switching apparatus, wherein the apparatus comprises:
a switching module, configured to: when it is detected that a speed of a vehicle is greater than or equal to a first threshold, switch a three-dimensional scene viewing angle of the vehicle from a top-down viewing angle to a first viewing angle, wherein the first viewing angle is a driving viewing angle, the first viewing angle is a viewing angle that forms a first included angle with a horizontal direction, and the first included angle is less than 90°.

12. The apparatus according to claim 11, wherein the switching module is further configured to:
when it is detected that the speed of the vehicle is less than a second threshold and an obstacle is present in a first area in which the vehicle is located, switch the three-dimensional scene viewing angle of the vehicle from the first viewing angle to a second viewing angle, wherein the second viewing angle is a viewing angle that forms a second included angle with the horizontal direction, the second included angle is greater than the first included angle, and the second included angle is less than 90°.

13. The apparatus according to claim 12, wherein the apparatus further comprises:
a determining module, configured to determine whether the speed of the vehicle is greater than or equal to the first threshold, wherein
the determining module is further configured to determine whether the speed of the vehicle is less than the second threshold.

14. The apparatus according to claim 12 or 13, wherein the apparatus further comprises:
an identification module, configured to identify whether an obstacle is present in the first area in which the vehicle is located.

15. The apparatus according to any one of claims 12 to 14, wherein the first threshold is greater than the second threshold, or the first threshold is equal to the second threshold.

16. The apparatus according to any one of claims 12 to 15, wherein the first included angle is equal to 15°.

17. The apparatus according to any one of claims 12 to 16, wherein the second included angle is equal to 30°, the second included angle is equal to 45°, or the second included angle is equal to 60°.

18. The apparatus according to any one of claims 11 to 17, wherein the first threshold is 30 km/h.

19. The apparatus according to any one of claims 11 to 17, wherein the first area is a rounded rectangular area centered on the vehicle, and a long side of the rounded rectangular area is parallel to a vehicle door side of the vehicle.

20. An electronic device, wherein the electronic device comprises:
one or more processors;
one or more memories; and
one or more computer programs, wherein the one or more computer programs are stored in the one or more memories; the one or more computer programs comprise instructions; and when the instructions are executed by the one or more processors, the electronic device is enabled to perform the method according to any one of claims 1 to 10.

21. A vehicle, wherein the vehicle comprises the apparatus according to any one of claims 11 to 19, or the vehicle comprises the electronic device according to claim 20.

22. A computer-readable storage medium, wherein the computer-readable storage medium stores a computer program; and when the computer program is executed by a computer, the computer is enabled to implement the method according to any one of claims 1 to 10.

23. A chip, wherein the chip comprises a processor and a data interface, and the processor reads, through the data interface, instructions stored in a memory, to perform the method according to any one of claims 1 to 10.

24. A computer program product comprising instructions, wherein when the computer program product is run on a computer, the computer is enabled to perform the method according to any one of claims 1 to 10.
